# EUROPEAN PATENT APPLICATION

(11) **EP 3 404 908 A1**
(43) Date of publication of application: **21.11.2018**
(21) Application number: 18164003.8
(22) Date of filing: 26.03.2018
(51) Int. Cl.: H04N 1/00, G06F 3/12

(54) **METHOD FOR DISPLAYING PRINT SETTING SCREEN BY TERMINAL**

(30) Priority: 12.04.2017 JP 2017078810
(71) Applicant: KABUSHIKI KAISHA TOSHIBA, Minato-ku Tokyo 105-8001 (JP); Toshiba TEC Kabushiki Kaisha, Tokyo 141-8562 (JP)
(72) Inventor: ISHIDA, Tetsuya, Shinagawa-ku,, Tokyo 141-8562 (JP)
(74) Representative: Takeuchi, Maya

(57) **Abstract**

A method is used to enable a terminal to display a print setting screen containing a setting item of a color mode for specifying a color used in a printing and a setting item of a color material mode for specifying a color material used in the printing.

## Description

### FIELD

The present invention relates to the field of recording apparatus in general, and embodiments described herein relate in particular to a print setting screen of an image forming apparatus capable of using a normal color material and a decolorable color material.

### BACKGROUND

Conventionally, in a printer driver for an image forming apparatus of a color device, a setting item of a color mode is contained as a setting item of a print setting screen. In the setting item of the color mode, it is possible to select a full color printing capable of using color material of all colors and a monochrome printing using only a black color material. The setting item of the color mode of a monochrome device is set by default to a gray scale using only the black color material.

Incidentally, in the image forming apparatus, in addition to printing with the normal color material described above, an image forming apparatus capable of executing printing using a erasable color material that can be erased by heating is developed (for example, Japanese Unexamined Patent Application Publication No. 2015-168093). In such the image forming apparatus, when using the conventional printer driver, it may not be possible to reduce unnecessary printing and lower printing cost b utilizing a merit of using the erasable color material.

To solve such problem, there is provided a method, including:
displaying a print setting screen comprising:
(a) a setting item of a color mode for specifying a color used in a printing and
(b) a setting item of a color material mode for specifying a color material used in the printing.

Preferably, the method further includes:
receiving a selection of any one of:
(a) a normal color material mode in which only a normal color material having no erasing function is used,
(b) an erasing color material mode in which only an erasable color material is used, and
(c) a mixed mode in which the normal color material and the erasable color material are used at the same time in the setting item of the color material mode.

Preferably still, the method further includes:
setting a monochrome mode in which only one color is used fixedly in the setting item of the color mode, and
receiving a selection of any one of:
   (a) the normal color material mode in which only the normal color material of the one color is used,
   (b) the erasing color material mode in which only the erasable color material of the one color is used, and
   (c) the mixed mode in the setting item of the color material mode.

Preferably yet, the method further includes:
displaying a preview image in response to the color material mode indicating a printing state of a file which is a printing object on a sheet.

Suitably, the method further includes:
extracting a placeholder text in the file which is the printing object when receiving the selection of the mixed mode in the setting item of the color material mode, and
containing a designation for printing the placeholder text with the erasable color material in the print setting screen.

The invention also relates to an apparatus, including:
a print setting screen comprising:
(a) a setting item of a color mode configured to specify a color used in a printing and
(b) a setting item of a color material mode configured to specify a color material used in the printing.

Preferably, the apparatus further includes any one of:
(a) a normal color material mode in which only a normal color material having no erasing function is used,
(b) an erasing color material mode in which only an erasable color material is used, and
(c) a mixed mode in which the normal color material and the erasable color material are used at the same time in the setting item of the color material mode.

Preferably still, the apparatus further includes:
a monochrome mode in which only one color is used fixedly in the setting item of the color mode, and
any one of:
   (a) the normal color material mode in which only the normal color material of the one color is used,
   (b) the erasing color material mode in which only the erasable color material of the one color is used, and
   (c) the mixed mode in the setting item of the color material mode.

Preferably yet, the apparatus further includes:
a preview image configured to indicate a printing state of a file which is a printing object on a sheet.

Preferably yet, the apparatus further includes:
a placeholder text in the file which is the printing object when the apparatus comprises the mixed mode in the setting item of the color material mode, and
a designation configured to print the placeholder text with the erasable color material in the print setting screen.

The invention further relates to a printing system comprising an image forming apparatus, wherein the image forming apparatus includes an image forming section; a scanner; a display; an input section; a memory component; and a controller,
wherein the image forming section is configured for forming an image on a sheet using an erasable color material and a normal color material and includes:
photoconductive drums configured to form an electrostatic latent image using a light source;
developing devices configured to develop the electrostatic latent image on the photoconductive drums;
an intermediate transfer belt configured to receive the developed electrostatic latent image from the photoconductive drums; and
a fixing device configured to receive the sheet and form the electrostatic latent image onto the sheet.

Preferably, the developing devices are configured to develop an electrostatic latent image on the photoconductive drums using the erasable color material.

Preferably still, the developing devices are further configured to develop an electrostatic latent image on the photoconductive drums using the normal color material.

Suitably, the electrostatic latent image developed using the normal color material is overlaid on the electrostatic latent image developed using the erasable color material.

### DESCRIPTION OF THE DRAWINGS

The above and other objects, features and advantages of the present invention will be made apparent from the following description of the preferred embodiments, given as non-limiting examples, with reference to the accompanying drawings, in which:
Fig. 1 is a block diagram illustrating the constitution of a printing system;
Fig. 2 is a diagram illustrating the constitution of an image forming section;
Fig. 3 is a flowchart illustrating a reception processing of a print setting by a smart phone;
Fig. 4 is a print setting screen of an application;
Fig. 5 is a diagram illustrating a selection screen of a toner mode;
Fig. 6 is a diagram illustrating an expanded screen of a preview image in a black and blue mode;
Fig. 7 is a diagram illustrating an expanded screen of the preview image in the black and blue mode;
Fig. 8 is a flowchart illustrating a reception processing of a print setting by a PC; and
Fig. 9 is a diagram illustrating a print setting screen by a printer driver.

### DETAILED DESCRIPTION

In accordance with an embodiment, a method is used to enable a terminal to display a print setting screen containing a setting item of a color mode for specifying a color used in a printing and a setting item of a color material mode for specifying a color material used in the printing.

Hereinafter, the embodiment is described with reference to the accompanying drawings.

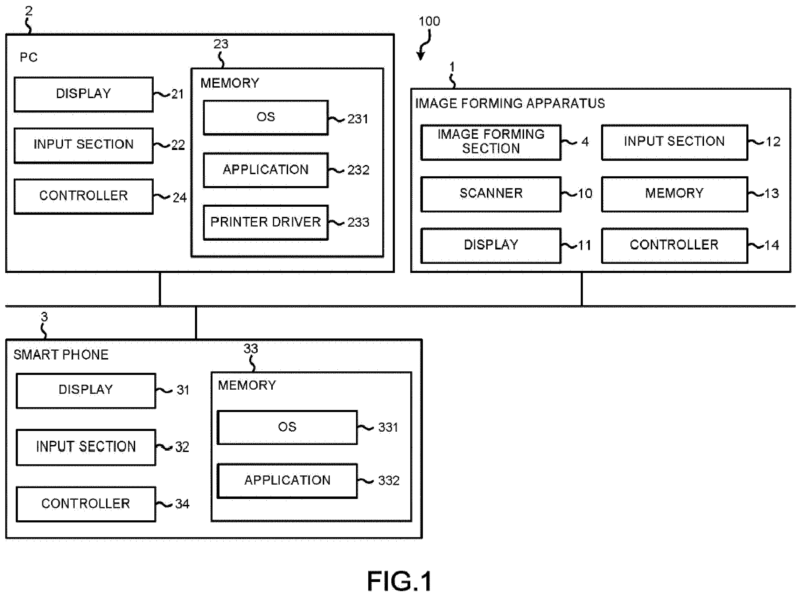

Fig. 1 is a block diagram illustrating the constitution of a printing system 100.

The printing system 100 includes an image forming apparatus 1, a PC 2 (terminal), and a smart phone 3 (terminal). In one embodiment, the image forming apparatus 1, PC 2, and smart phone 3 are connected to each other via a network. In one embodiment, the image forming apparatus 1, PC 2, and smart phone 3 may be connected to the network via a modem. In one embodiment, the image forming apparatus 1, PC 2, and smart phone 3 may be directly connected to each other in a wired or wireless manner.

The image forming apparatus 1 is an MFP (Multi-Function Peripheral) having a plurality of functions such as copy, print, scan, FAX, and E-mail transmission. The image forming apparatus 1 includes an image forming section 4, a scanner 10, a display 11, an input section 12, a memory 13 and a controller 14.

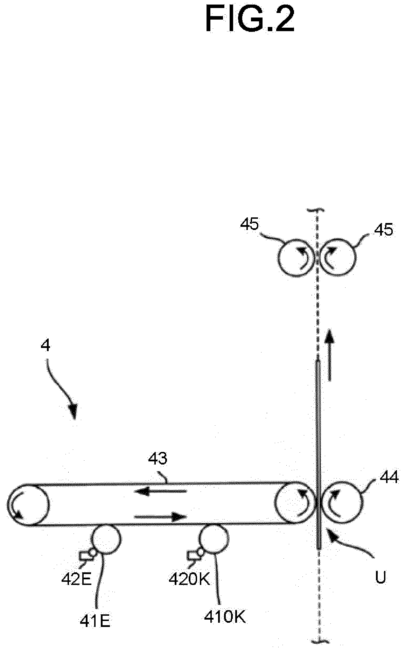

Fig. 2 is a diagram illustrating the constitution of image forming section 4.

The image forming section 4 forms an image on a sheet using a decoloring toner (erasable color material) and a non-decoloring toner (normal color material). The image forming section 4 includes photoconductive drums 41E and 410K, developing devices 42E and 420K, an intermediate transfer belt 43, a secondary transfer roller 44 and a fixing device 45.

A light source (not shown) such as an LED (Light Emitting Diode) forms an electrostatic latent image on the photoconductive drums 41E and 410K. The developing device 42E develops the electrostatic latent image on the photoconductive drum 41E using the decoloring toner.

The decoloring toner includes a color developing compound, a developer, and a decoloring agent. For example, leuco dyes that develop color in blue are exemplified as the color developing compound. For example, phenols are exemplified as the developer. For example, a substance that is compatible with the color developing compound if heated and has no affinity for the color developer is exemplified as the decoloring agent. The decoloring toner develops color due to an interaction between the color developing compound and the developer, and is decolorized due to cutting of the interaction between the color developing compound and the developer by heating to a decoloring temperature or higher.

The "decoloring" means making an image formed by a color (including not only chromatic color but also achromatic colors such as white and black) different from a color of a base of the sheet visually invisible or difficult to see visually. The "make it invisible visually" means that change a color of the image formed with the color different from the color of the base of the sheet to a color the same as or similar to the color of the base of the sheet in addition to a mode in which the image formed with the color different from the color of the base of the sheet is colorless (transparent).

The decoloring processing refers to a processing of heating a sheet on which an image is formed using the decoloring toner at a decoloring temperature or more at which the decoloring toner part is decolorized to erase the image part by the decoloring toner.

The developing device 420K develops the electrostatic latent image on the photoconductive drum 410K using the non-decoloring toner. The non-decoloring toner is a toner that maintains color development at the time the sheet is decolorized, and in the present embodiment, the non-decoloring toner a black (K) toner. The non-decoloring toner is a normal color material which is not decolorized, and does not contain a developing agent or a decoloring agent, for example. In addition to the resin, the non-decoloring toner may contain carbon as a coloring agent.

The photoconductive drums 41E and 410K transfer the image onto the intermediate transfer belt 43. If the image forming apparatus 1 forms an image using both the non-decoloring toner and the decoloring toner, the image by the non-decoloring toner by the photoconductive drum 410K is overlaid on the image by the decoloring toner by the photoconductive drum 41E. As a result, one image by black toner and blue toner is formed on the intermediate transfer belt 43.

If the image forming apparatus 1 forms an image using only the non-decoloring toner, the image by the decoloring toner by the photoconductive drum 41E cannot be superimposed on the image by the non-decoloring toner by the photoconductive drum 410K. If the image forming apparatus 1 forms an image using only the decoloring toner, the image by the non-decoloring toner by the photoconductive drum 410K is superimposed on the image by the decoloring toner by the photoconductive drum 41E.

The image forming apparatus 1 takes the sheet out of a cassette (not shown) to feed the sheet to a secondary transfer position U between the intermediate transfer belt 43 and the secondary transfer roller 44. The image forming apparatus 1 transfers the toner image on the intermediate transfer belt 43 onto the sheet. The image forming apparatus 1 feeds the sheet to the fixing device 45 and applies heat and pressure to the sheet with the fixing device 45 to fix the toner image on the sheet.

Returning to Fig. 1, and the scanner 10 of the image forming apparatus 1 reads the image sheet with an image capturing element to generate image data. The image forming apparatus 1 can store the image data in the memory 13, print it on the sheet, and send it by FAX or E-mail.

The display 11 is a touch panel or the like, and displays setting information and operation status of the image forming apparatus 1, log information, and notification to the user. The input section 12 is a button, a key, or a touch panel. The input section 12 receives an input from a user to receive an instruction of a functional operation of the image forming apparatus 1 such as a print instruction and an input of setting.

The memory 13 stores various programs and setting information. The controller 14 controls the whole of the image forming apparatus 1. The controller 14 reads the program in the memory 13 to execute various processing.

The PC 2 can send a print job to the image forming apparatus 1. The PC 2 includes a display 21, an input section 22, a memory 23 and a controller 24. The display 21 is a touch panel or the like, and displays a setting screen of a print job. The input section 22 is a button, a key, or a touch panel, and receives an input from the user.

The memory 23 stores an OS 231 (Operating System), an application 232, a printer driver 233 unique to the image forming apparatus 1.

The controller 24 controls the whole of PC 2, and realizes various functions by reading OS 231, application 232, and printer driver 233 from the memory 23.

The smart phone 3 can send a print instruction to the image forming apparatus 1 by starting an application 332. The smart phone 3 starts the application 332 to receive the print setting in a file. The smart phone 3 sends the file and the print setting to a cloud (server group that is not shown) or the PC 2. The cloud or PC 2 generates a print job based on the file and the print setting and sends the print job to the image forming apparatus 1. The smart phone 3 may receive the print setting in the file in the cloud and send only the print setting to the cloud. In this case, the smart phone 3 may acquire the file from the cloud which is a printing object and display a preview screen at the time of receiving the print setting described later.

The smart phone 3 may have the printer driver and generate the print job directly. The smart phone 3 may send the file and the print setting directly to the image forming apparatus 1. The image forming apparatus 1 may generate the print job based on the file and the print setting to execute the print job.

The smart phone 3 includes a display 31, an input section 32, a memory 33 and a controller 34. The display 31 is a touch panel or the like and displays the print setting screen. The input section 32 is a touch panel and receives the input from the user.

The memory 33 stores an OS 331 and the application 332 for executing printing.

The controller 34 controls the whole of the smart phone 3, and realizes various functions by reading OS 331 and application 332 from the memory 33.

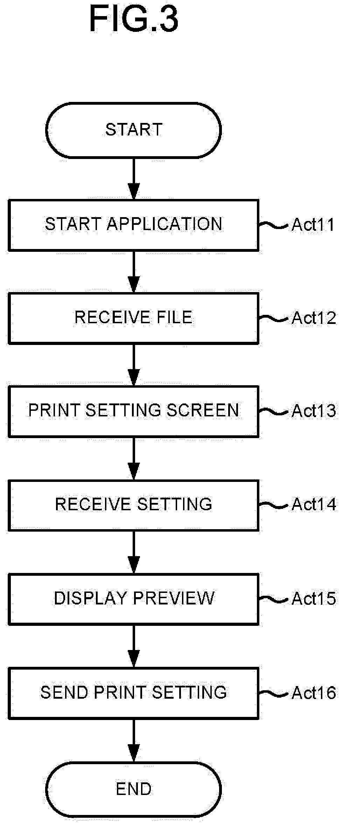

The reception processing of the print setting by the smart phone 3 is described below with reference to the flowchart in Fig. 3.

Controller 34 of the smart phone 3 starts the application 332 (Act 11) to display a screen for receiving the selection of the file which is the printing object on the display 31. The smart phone 3 receives the selection of the file which is the printing object (Act 12). A document and a photo can be selected as the file. By opening a web page via the application 332, the smart phone 3 may receive selection of the web page as the file which is the printing object.

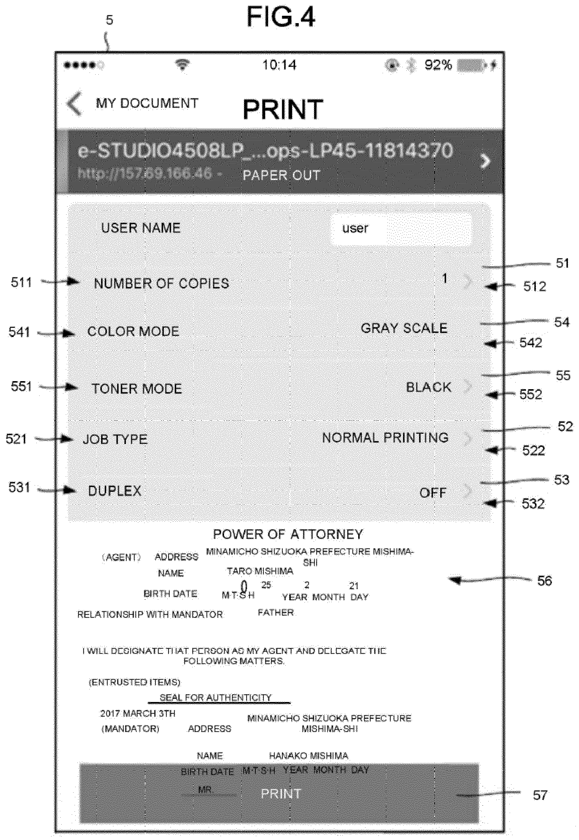

Fig. 4 is a print setting screen 5 of the application 332.

The smart phone 3 displays the print setting screen 5 of the file which is the printing object (Act 13). A case in which the document is selected as the file which is the printing object is described.

The print setting screen 5 includes setting items 51-55, a preview area 56 and a print button 57 in one screen. In setting items 51-55, setting item names 511-551 are displayed at the left side in a rectangle label which is long in a longitudinal direction, and parameters 512-552 (setting values or setting names) are displayed at the right side of the label.

In the setting item 51, the setting item name 511 is the number of copies and can set the number of copies.

In the setting item 52, the setting item name 521 is a job type and can set a job type. If the image forming apparatus receives the print job as the job type, in the setting item 52, a normal printing for printing or a hold printing in which printing is executed after the image forming apparatus 1 receives the execution instruction of the print job by the user can be set.

In the setting item 53, the setting item name 531 is duplex and can set whether to execute a duplex printing.

In the setting item 54, the setting item name 541 is the color mode, and can set the color mode which specifies the color of the non-decoloring toner used at the time of the printing.

In one embodiment, the image forming apparatus 1 is a monochrome device that uses only one black color as the non-decoloring toner. Therefore, the smart phone 3 fixedly sets the setting item 54 of the color mode to a grayscale mode (monochrome mode using only one color) using only black color.

In the setting item 55, the setting item name 551 is the toner mode, and can set the toner mode (color material mode in which the coloring material is specified) which specifies the toner used at the time of printing.

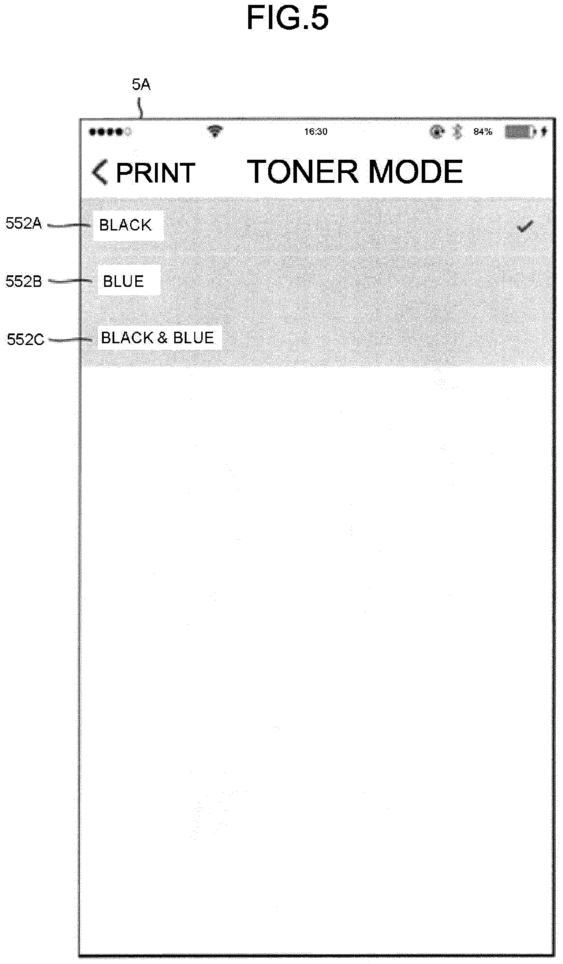

Fig. 5 is a diagram illustrating a selection screen 5A of the toner mode.

If an area of the setting item 55 of the toner mode is touched, the smart phone 3 displays the selection screen 5A of the toner mode in Fig. 5. The selection screen 5A displays a label 552A of a black mode (normal color material mode) using only the black non-decoloring toner, a label 552B of the blue mode (erasing color material) using only the blue decoloring toner, and a label 552C of a black and blue mode (mixed mode) that can simultaneously use the black non-decoloring toner the blue decoloring toner.

The smart phone 3 displays a check mark on labels 552A-552C (refer to the label 552A) by touching the label 552A-552C and receives selection of the toner mode indicated by the label 552A-552C. The smart phone 3 displays the print setting screen 5 in Fig. 4 again if receiving the selection of any mode in the selection screen 5A.

The smart phone 3 receives the setting of the setting items 51-55 in the print setting screen 5 (Act 14).

At this time, the smart phone 3 displays the preview image of the file which is the printing object at a preview area 56 (Act 15). The preview area 56 is below setting items 51-55. The preview image shows the state of printing of the file which is the printing object on the sheet.

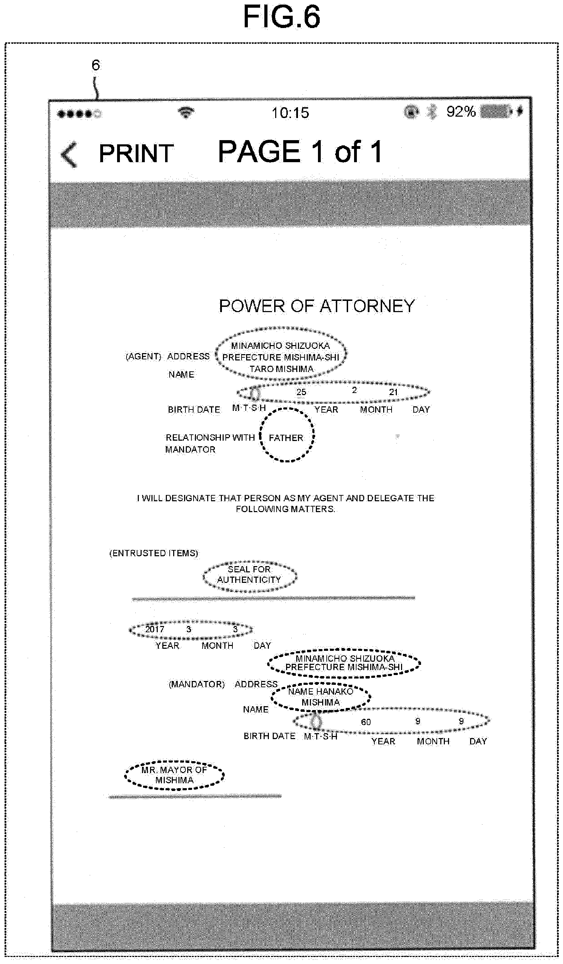

Fig. 6 is a diagram illustrating an expanded screen 6 of the preview image in the black and blue mode.

If the preview image in the print setting screen 5 in Fig. 4 is touched, as shown in Fig. 6, the smart phone 3 displays the expanded screen 6 of the preview image. The smart phone 3 displays the preview image according to the toner mode on the print setting screen 5 and the expanded screen 6.

The smart phone 3 displays the preview image if the toner mode is the black mode and the file which is the printing object is printed with only the black non-decoloring toner. The smart phone 3 displays the preview image if the toner mode is the blue mode and the file which is the printing object is printed with only the blue decoloring toner.

If the toner mode is the black and blue mode, as shown in Fig. 6, the smart phone 3 displays the preview image if the file which is the printing object is printed with the black non-decoloring toner and the blue decoloring toner.

The file which is the printing object is a document and is a supplementary material to an application document. The supplementary material is distributed for reference of the application document if the application document is requested to a company, a government office, etc. In the supplementary material, an entry example is marked in red. Conventionally, there is a problem that such supplementary material causes an increase in printing cost, or a problem that an applicant must alternately refer to the supplementary material and the application document, which is inconvenient for entry of the application document.

In one embodiment, the smart phone 3 designates a black text in the supplementary material file as a printing area using the black non-decoloring toner if the black and blue mode is set. The smart phone 3 designates the red text as a printing area using the blue decoloring toner.

Thus, in one embodiment, by printing the supplementary material file with the above setting, it is possible to write the supplementary material file on the sheet as it is. Then, the applicant can erase the filled sheet to erase the text part of the entry example, so that the sheet can be used as the application document. The receiving side of the sheet may decolorize the sheet.

As described above, in one embodiment, since the supplementary material can be used as the application document, the printing cost can be reduced. In one embodiment, it is not necessary for the applicant to refer to the supplementary material and the application document alternately, so it is easy to write the application document.

Various methods can be applied to how to designate the printing area by the blue decoloring toner. For example, in Figs. 4 and 5, since the file which is the printing object is the document, the text can be classified into black and other than black based on font color information of the text. Then, it is possible to designate the font color information of the text classified into black along the greyscale. It is possible to designate the font color information of the text classified into other than black as the blue decoloring toner.

As a result, if receiving the print setting including designation of the document and the font color information, the image forming apparatus 1 can print the text whose font color information is the blue decoloring toner with the blue decoloring toner.

As another method of designating the printing area by the blue decoloring toner, each element in the image of the file which is the printing object can be classified into an element in which the color information is black and an element in which the color information is not black. Then, it is possible to designate the element classified into black as the black printing area, and designate the element which is classified into other than black as the blue printing area.

By applying the conventional technology of executes two-color printing on the image data having plural colors, it is possible to determine the printing area by the blue decoloring toner. In addition, a pixel of a predetermined color, for example, a red pixel may be designated as the printing area by the blue decoloring toner in the color information.

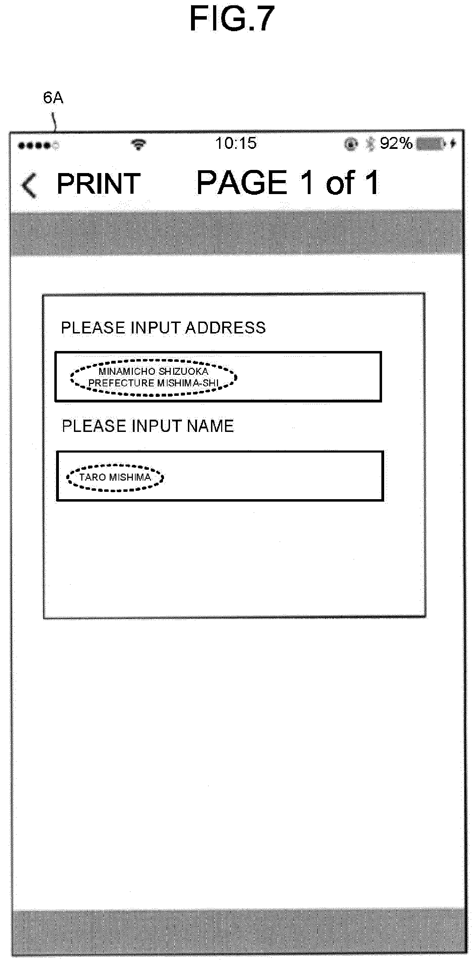

Fig. 7 is a diagram illustrating an expanded screen 6A of the preview image in the black and blue mode. Fig. 7 shows the expanded screen 6A at the time of the print setting of the web page. In Fig. 7, a text which is a placeholder text on the web page is surrounded by one-dot chain line.

On a web page and a display screen provided by a mobile application, the placeholder text is generally displayed in an input field (text box and text area). The placeholder text displays a hint relating to the input and an input example. If information is input in the input field on the web page or the display screen provided by the mobile application, the placeholder text is automatically deleted.

Therefore, the application document is supplied on a web page (or a display screen provided by the mobile application). The applicant can input necessary items in the input field by referring to the placeholder text in the input field on the web page. Since the placeholder text is deleted after inputting, by printing the input web page, a printed sheet can be used as the application document.

However, an applicant who is not well-versed in operating the PC or mobile terminals and wants to print the application document provided on the web page may fill the necessary information by handwriting on the printed sheet. However, in this case, since the placeholder text is displayed in the printed application document, the application document will not be received as an official document.

In order to solve such a problem, the application document incorporated with the placeholder text is supplied as the supplementary material and the application document not incorporated with the placeholder text is supplied as a formal application document by the web page. In this case, costs may increase and it is inconvenient to write the application document because it is necessary for the applicant to alternately refer to the supplementary material and the application document.

Thus, the smart phone 3 analyzes an HTML (HyperText Markup Language) file of the web page and recognizes the placeholder text if the toner mode is the black and blue mode. The smart phone 3 designates the placeholder text as the printing area by the blue decoloring toner.

In this way, in one embodiment, even if the application document supplied on the web page is printed without being filled and the necessary information is written manually on the sheet, by decolorizing the sheet by the applicant or the receiver, the placeholder text can be erased. Therefore, the applicant who is not well-versed in operating the PC or mobile terminal can also create the application document by web page incorporated with the placeholder text.

The smart phone 3 may designate the setting area, setting characters and a setting figure in the file which is the printing object as the printing areas by the blue decoloring toner if the toner mode is the black and blue mode. If the file which is the printing object is an image rather than the document, the smart phone 3 may determine setting characters by OCR (Optical Character Recognition) of the image. Then, the smart phone 3 may designate determined areas, characters and figures as the print areas by the blue decoloring toner. In this way, the smart phone 3 can determine the entry example, the supplementary explanation, the placeholder text and the like in the file which is the printing object to designate the determination target as the printing area by the blue decoloring toner.

The smart phone 3 sends the file which is the printing object and the print setting to the cloud (Act 16). The print setting includes designation of the printing area of the black non-decoloring toner, and designation of the printing area of the blue decoloring toner. The print setting also includes the address of the image forming apparatus 1 and information necessary for generating a print job.

The cloud generates the print job based on the file which is the printing object and the print setting and sends it to the image forming apparatus 1. The image forming apparatus 1 executes the print job to print the file which is the printing object.

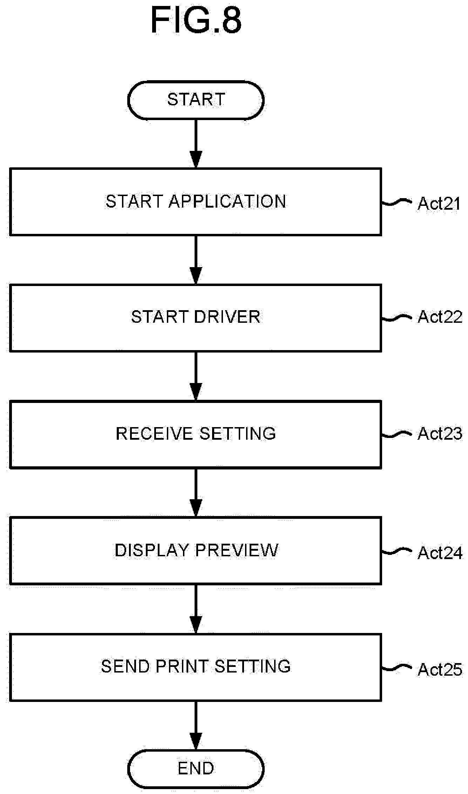

Hereafter, a reception processing of the print setting by the PC 2 is described with reference to the flowchart in Fig. 8. The present processing is almost the same as the processing in Fig. 3 by the smart phone 3, but the present processing differs from the processing in Fig. 3 in that the print job is generated finally.

Controller 24 of the PC 2 starts the application 232 (Act 21) and displays the file such as a document.

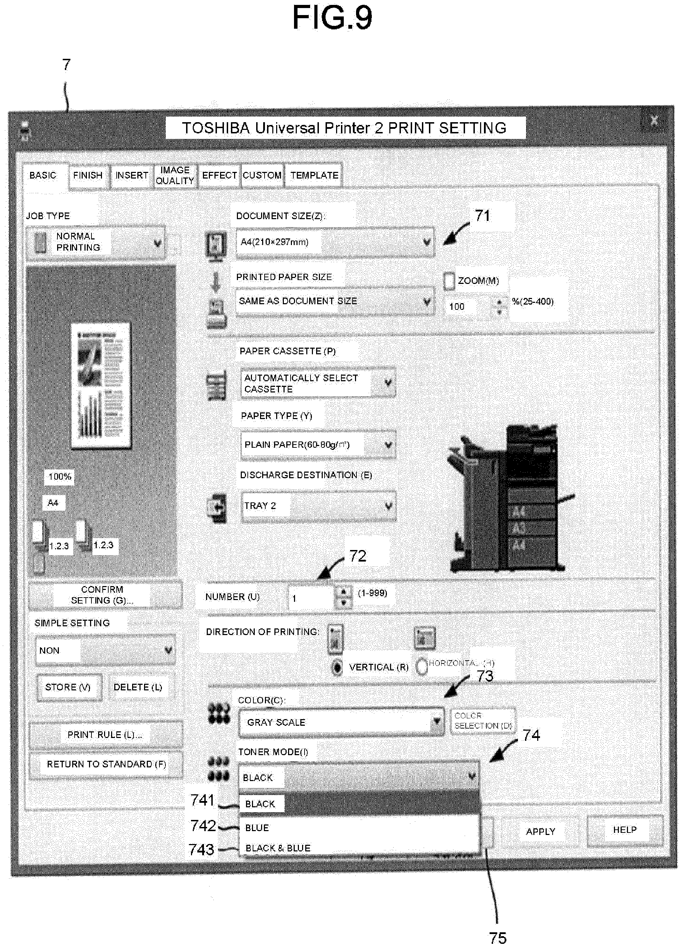

Fig. 9 is a diagram illustrating a print setting screen 7 by the printer driver 233.

On the print setting screen of the application 232, the image forming apparatus 1 used for printing is selected by the user, and then a property button is selected by the user. As shown in Fig. 9, the PC 2 displays the print setting screen 7 of the printer driver 233 unique to the image forming apparatus 1 (Act 22).

In addition to a setting item 71 of the original size and a setting item 72 of the number of copies, the print setting screen 7 also includes a setting item 73 of the color mode and a setting item 74 of the toner mode, which is similar to the print setting screen 5 by the smart phone 3.

In the setting item 73 of the color mode, the color mode is described as the setting item name, and the color mode in which the color of the non-decoloring toner used at the time of printing is specified can be set. Since the image forming apparatus 1 is a monochrome device that uses only one black color as the non-decoloring toner, the color mode is set fixedly in the grayscale mode.

In the setting item 74 of the toner mode, the toner mode is written as the setting item name and the toner mode in which the toner used for printing is specified can be set. If an area where the toner mode name is displayed in the setting item 74 of the toner mode is clicked, the PC 2 displays items 741-743 of the black mode, the blue mode, the black and blue mode, respectively, in a drop-down list. If the items 741-743 are selected, the PC 2 sets the toner mode corresponding to the items 741-743.

The PC 2 receives the print setting such as the color mode and the toner mode on the print setting screen 7 as described above (Act 23).

The PC 2 closes the print setting screen 7 of the printer driver 233 if the user selects an OK button 75 behind the drop-down list of the toner mode in Fig. 9.

The PC 2 displays a preview screen of the file which is the printing object in the print setting screen of the application 232 in the same way as the display method of the preview screen in the smart phone 3. At this time, the PC 2 displays a preview screen based on the received print setting such as the toner mode (Act 24).

If the OK button is selected by the user in the print setting screen of the application 232, the PC 2 generates the print job based on the print setting screen 7 of the printer driver 233, the print setting screen of the application 232, and the file which is the printing object. The PC 2 sends the print job to the image forming apparatus 1 (Act 25). The image forming apparatus 1 prints the file which is the printing object based on the print job.

### (Modification)

In one embodiment, the image forming apparatus 1 uses only one black color as the non-decoloring toner, but may also use plural colors such as YMCK as the non-decoloring toner.

In one embodiment, in the setting items 54 and 73 of the color mode, the color mode in which the color of the non-decoloring toner is specified in the printed image may be selected. In the setting items 54 and 73 of the color mode, an automatic color selection mode, a full color mode, a monochrome mode, dichroic mode may be selected as conventional.

In one embodiment, a color mode, a blue mode, a color and blue mode may be selected in the setting items 55 and 74 of the toner mode. The color mode is a mode in which only the non-decoloring toner is used, and the blue mode a mode in which only the decoloring toner is used. The color and blue mode is a mode in which the decoloring toner and the non-decoloring toner can be used together.

A case in which the file which is the printing object is a document if the color and blue mode is set is considered. In this case, the PC 2 and the smart phone 3 can determine a text that the font color information is a predetermined red in the same way as in the above embodiment and designate the font color information of the text as blue by the non-decoloring toner.

In the case where the color and blue mode is set, if the file which is the printing object is a web file, as in the above embodiment, it is possible to designate the placeholder text as the printing area by the blue non-decoloring toner, and designate the font color information of the placeholder text as the blue non-decoloring toner.

In one embodiment, the image forming apparatus 1 uses only one blue color as the decoloring toner, but may use plural colors such as YMCK. A case in which the file which is the printing object is a document if the color and blue mode is set is considered. In this case, the PC 2 and the smart phone 3 can determine a text that the font color information is a predetermined red in the same way as in the above modification, designate the font color information of the text as red non-decoloring toner or as a predetermined blue decoloring toner.

In a case in which the color and blue mode is set, if the file which is the printing object is a web file, the PC 2 and the smart phone 3 also designate the font color information of the placeholder text to the color of the non-decoloring toner having the same color as the font color information of the placeholder text, or to the predetermined blue decoloring toner.

In one embodiment, the non-decoloring toner and the decoloring toner are different colors, but may be the same color.

In one embodiment, the toner is used as the color material, but ink or the like may be used. The printing system of the image forming apparatus 1 may be not an electronic transfer system but an inkjet system.

In one embodiment, the erasable color material is decolorized by heating, but may be decolorized by being irradiated with the light. The erasable color material may a toner or an ink suitable for being removed from the sheet by a blade or the like.

The sheet (image receiving medium) may be a paper, an envelope, a transparency or the like.

The image forming apparatus 1 may execute the reception processing of the print setting similar to the reception processing of the print setting by the PC 2 or the reception processing of the print setting by the smart phone 3.

As described in detail above, a technology for improving functionality and practicality of use by a user of the print setting screen of an image forming apparatus (configured to use normal color material and erasable color material) is provided.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions. The accompanying claims and their equivalents are intended to cover such forms or modifications as would fall within the scope of the inventions.

## Claims

1. A method, including:
displaying a print setting screen comprising:
(a) a setting item of a color mode for specifying a color used in a printing and
(b) a setting item of a color material mode for specifying a color material used in the printing.

2. The method according to claim 1, further including:
receiving a selection of any one of:
(a) a normal color material mode in which only a normal color material having no erasing function is used,
(b) an erasing color material mode in which only an erasable color material is used, and
(c) a mixed mode in which the normal color material and the erasable color material are used at the same time in the setting item of the color material mode.

3. The method according to claim 2, further including:
setting a monochrome mode in which only one color is used fixedly in the setting item of the color mode, and
receiving a selection of any one of:
(a) the normal color material mode in which only the normal color material of the one color is used,
(b) the erasing color material mode in which only the erasable color material of the one color is used, and
(c) the mixed mode in the setting item of the color material mode.

4. The method according to any one of claims 1 to 3, further including:
displaying a preview image in response to the color material mode indicating a printing state of a file which is a printing object on a sheet.

5. The method according to claim 4, further including:
extracting a placeholder text in the file which is the printing object when receiving the selection of the mixed mode in the setting item of the color material mode, and
containing a designation for printing the placeholder text with the erasable color material in the print setting screen.

6. An apparatus, including:
a print setting screen comprising:
(a) a setting item of a color mode configured to specify a color used in a printing and
(b) a setting item of a color material mode configured to specify a color material used in the printing.

7. The apparatus according to claim 6, further including any one of:
(a) a normal color material mode in which only a normal color material having no erasing function is used,
(b) an erasing color material mode in which only an erasable color material is used, and
(c) a mixed mode in which the normal color material and the erasable color material are used at the same time in the setting item of the color material mode.

8. The apparatus according to claim 7, further including:
a monochrome mode in which only one color is used fixedly in the setting item of the color mode, and
any one of:
(a) the normal color material mode in which only the normal color material of the one color is used,
(b) the erasing color material mode in which only the erasable color material of the one color is used, and
(c) the mixed mode in the setting item of the color material mode.

9. The apparatus according to any one of claims 6 to 8, further including:
a preview image configured to indicate a printing state of a file which is a printing object on a sheet.

10. The apparatus according to claim 9, further including:
a placeholder text in the file which is the printing object when the apparatus comprises the mixed mode in the setting item of the color material mode, and
a designation configured to print the placeholder text with the erasable color material in the print setting screen.

11. A printing system comprising an image forming apparatus, wherein the image forming apparatus includes an image forming section; a scanner; a display; an input section; a memory component; and a controller,
wherein the image forming section is configured for forming an image on a sheet using an erasable color material and a normal color material and includes:
photoconductive drums configured to form an electrostatic latent image using a light source;
developing devices configured to develop the electrostatic latent image on the photoconductive drums;
an intermediate transfer belt configured to receive the developed electrostatic latent image from the photoconductive drums; and
a fixing device configured to receive the sheet and form the electrostatic latent image onto the sheet.

12. The printing system according to claim 11, wherein the developing devices are configured to develop an electrostatic latent image on the photoconductive drums using the erasable color material.

13. The printing system according to claim 12, wherein the developing devices are further configured to develop an electrostatic latent image on the photoconductive drums using the normal color material.

14. The printing system according to claim 13, wherein the electrostatic latent image developed using the normal color material is overlaid on the electrostatic latent image developed using the erasable color material.
